# EUROPEAN PATENT APPLICATION

(11) **EP 4 801 001 A1**
(43) Date of publication of application: **02.09.2026**
(21) Application number: 24884135.5
(22) Date of filing: 15.08.2024
(51) Int. Cl.: H04L 45/02

(54) **PACKET FORWARDING POLICY CONTROL METHOD AND DEVICE UNDER TSN, AND STORAGE MEDIUM**

(30) Priority: 31.10.2023 CN 202311438187
(71) Applicant: ZTE CORPORATION, Shenzhen, Guangdong 518057 (CN)
(72) Inventor: ZHANG, Luyao, Shenzhen, Guangdong 518057 (CN); ZOU, Luning, Shenzhen, Guangdong 518057 (CN)
(74) Representative: Ziebig Hengelhaupt Intellectual Property Attorneys Patentanwaltskanzlei PartGmbB
(86) International application number: PCT/CN2024/112344
(87) International publication number: WO 2025/092128

(57) **Abstract**

The present description provides a packet forwarding policy control method and device under a TSN, and a storage medium. The packet forwarding policy control method under the TSN comprises: when the movement of a user terminal changes the topological structure of a user plane function (UPF), an SMF determining first information, wherein the first information comprises a current forwarding policy and current time delay information of a target packet, and the target packet is a packet sent to or from the user terminal; reporting the first information to a PCF, wherein the PCF is used for adjusting the current forwarding policy on the basis of the first information to obtain a new forwarding policy; and receiving the new forwarding policy returned by the PCF and sending the new forwarding policy to a target device, so that the target device updates the current forwarding policy for the target packet to be the new forwarding policy.

## Description

### CROSS-REFERENCE TO RELATED APPLICATIONS

The present application claims priority to Chinese Patent Application No. 202311438187.9, filed with the CNIPA on October 31, 2023, and entitled "PACKET FORWARDING POLICY CONTROL METHOD AND DEVICE UNDER TSN, AND STORAGE MEDIUM", which is incorporated herein by reference in its entirety.

### TECHNICAL FIELD

The present disclosure relates to the technical field of mobile communications, in particular to a method for controlling a packet forwarding policy under a TSN, a device, and a storage medium.

### BACKGROUND

TSN is an abbreviation for a time-sensitive network. The TSN has strict requirements for packet delay and rhythm, neither fast nor slow.

However, in practical applications, user equipment (UE) using the TSN may cause changes in an intermediate user plane function (I-UPF) due to its own movement, resulting in changes in topology of a UPF. After the topology of the UPF changes, a path taken by packets from or sent to the UE also changes, which may affect delay of the packets and make it difficult to ensure the quality of service.

### SUMMARY

Embodiments of the present specification provide a method for controlling a packet forwarding policy under a TSN, a device, and a storage medium, so as to ensure that a delay of a packet is not affected after a UPF topology changes.

In order to solve the above technical problems, the embodiments of the present specification are implemented as follows.

In a first aspect, a method for controlling a packet forwarding policy under a TSN is provided, applied to a session management function (SMF). The method includes: determining first information in a case where a topological structure of a user plane function (UPF) changes due to a movement of user equipment, wherein the first information includes a current forwarding policy and current delay information of a target packet, and the target packet is a packet sent to or from the user equipment; reporting the first information to a policy control function (PCF), wherein the PCF is used for adjusting the current forwarding policy according to the first information to obtain a new forwarding policy; and receiving the new forwarding policy returned by the PCF and issuing the new forwarding policy to a target device, so that the target device updates the current forwarding policy for the target packet to be the new forwarding policy, wherein the target device includes an access and mobility management function (AMF), a radio access network (RAN), and the user equipment.

In a second aspect, a method for controlling a packet forwarding policy under a TSN is provided, applied to a policy control function (PCF). The method includes: receiving first information reported by a session management function (SMF), wherein the first information includes a current forwarding policy and current delay information of a target packet, and the target packet is a packet sent to or from user equipment; obtaining a new forwarding policy by adjusting the current forwarding policy according to the first information; and feeding the new forwarding policy back to the SMF, so that the SMF issues the new forwarding policy to a target device, wherein the target device includes an access and mobility management function (AMF), a radio access network (RAN), and the user equipment.

In a third aspect, an apparatus for controlling a packet forwarding policy under a TSN is provided, applied to a session management function (SMF). The apparatus includes: an information determining module, configured to determine first information in a case where a topological structure of a user plane function (UPF) changes due to a movement of user equipment, wherein the first information includes a current forwarding policy and current delay information of a target packet, and the target packet is a packet sent to or from the user equipment; an information reporting module, configured to report the first information to a policy control function (PCF), wherein the PCF is used for adjusting the current forwarding policy according to the first information to obtain a new forwarding policy; and a policy receiving module, configured to receive the new forwarding policy returned by the PCF and issue the new forwarding policy to a target device, so that the target device updates the current forwarding policy for the target packet to be the new forwarding policy, wherein the target device includes an access and mobility management function (AMF), a radio access network (RAN), and the user equipment.

In a fourth aspect, an apparatus for controlling a packet forwarding policy under a TSN is provided, applied to a policy control function (PCF). The apparatus includes: an information receiving module, configured to receive first information reported by a session management function (SMF), wherein the first information includes a current forwarding policy and current delay information of a target packet, and the target packet is a packet sent to or from user equipment; a policy adjusting module, configured to obtain a new forwarding policy by adjusting the current forwarding policy according to the first information; and a policy feedback module, configured to feed the new forwarding policy back to the SMF, so that the SMF issues the new forwarding policy to a target device, wherein the target device includes an access and mobility management function (AMF), a radio access network (RAN), and the user equipment.

In a fifth aspect, an electronic device is provided, including: a processor; and a memory, configured to store processor-executable instructions; wherein the processor is configured to execute the instructions, so as to implement the method as described in the first aspect or the second aspect.

In a sixth aspect, a computer-readable storage medium is provided, and instructions in the storage medium, when executed by a processor of an electronic device, enable the electronic device to perform the method as described in the first aspect or the second aspect.

### BRIEF DESCRIPTION OF DRAWING(S)

In order to illustrate technical solutions in embodiments of the present specification or the prior art more clearly, accompanying drawings needed in description of the embodiments or the prior art will be introduced below briefly. Apparently, the accompanying drawings in the descriptions below are only some embodiments recorded in the present specification, and those ordinarily skilled in the art may further obtain other accompanying drawings according to these accompanying drawings without creative efforts.
FIG. 1 is a schematic diagram of a TSN framework provided by an embodiment of the present specification.
FIG. 2 is a schematic flowchart of a method for controlling a packet forwarding policy under a TSN provided by an embodiment of the present specification.
FIG. 3 is a schematic diagram of an interaction process of a method for controlling a packet forwarding policy under a TSN in an application scenario 1 provided by an embodiment of the present specification.
FIG. 4 is a schematic diagram of an interaction process of a method for controlling a packet forwarding policy under a TSN in an application scenario 2 and an application scenario 3 provided by an embodiment of the present specification.
FIG. 5 is a schematic diagram of an interaction process of a method for controlling a packet forwarding policy under a TSN in an application scenario 4 provided by an embodiment of the present specification.
FIG. 6 is a schematic flowchart of a method for controlling a packet forwarding policy under a TSN provided by another embodiment of the present specification.
FIG. 7 is a schematic structural diagram of an apparatus for controlling a packet forwarding policy under a TSN provided by an embodiment of the present specification.
FIG. 8 is a schematic structural diagram of an apparatus for controlling a packet forwarding policy under a TSN provided by another embodiment of the present specification.
FIG. 9 is a schematic structural diagram of a network device 1000 according to an embodiment of the present specification.

### DETAILED DESCRIPTION

In order to make those skilled in the art better understand the technical solutions in the specification, the technical solutions in the embodiment of the present specification will be described below clearly and completely with reference to accompanying drawings in the embodiments of the present specification. Apparently, the described embodiments are only part of the embodiments of the present specification, but not all the embodiments. On the basis of the embodiments in the specification, all other embodiments obtained by those ordinarily skilled in the art without creative efforts should fall within the scope of protection of the specification.

It should be understood that the technical solutions of the embodiments of the present specification can be applied to various communication systems, such as a global system of mobile communication (GSM), a code division multiple access (CDMA) system, a wideband code division multiple access (WCDMA) system, a general packet radio service (GPRS) system, a long term evolution (LTE) system, an LTE frequency division duplex (FDD) system, an LTE time division duplex (TDD), a universal mobile telecommunication system (UMTS) or a worldwide interoperability for microwave access (WiMAX) communication system, a 5G system, or a new radio (NR) system.

User equipment (UE) is a type of terminal device, such as a vehicle-mounted terminal, mainly used in transportation vehicles. The user equipment may communicate with at least one core network via a radio access network (RAN).

A network device (also known as a network-side device) is an apparatus deployed in the radio access network to provide an information configuration function. The network device may be a base station. The base station may be a base transceiver station (BTS) in GSM or CDMA, a NodeB in WCDMA, an evolutional Node B (eNB or e-NodeB) in LTE, a 5G base station (gNB), and a network device in a subsequent evolved communication system. However, the terminology does not constitute a limitation on the scope of protection of the present specification.

It should be noted that when describing specific embodiments, the magnitude of the serial number of each process does not imply the sequence of execution. The execution sequence of each process should be determined by its function and internal logic, and should not constitute any limitation on the implementation process of the embodiments of the present specification.

It should further be noted that terms "first", "second", and the like in the present specification and the claims are used to distinguish similar objects, and are not used to describe a specific sequence or a precedence sequence. It should be understood that data used in this way may be interchanged where appropriate, so that the embodiments of the present specification can be implemented according to sequences other than those illustrated or described here. In addition, "and/or" in the present specification and the claims represents at least one of the connected objects. A character "/" generally represents that the association objects in front of and behind "/" are in an "or" relationship.

In order to ensure that a delay of a packet is not affected after a topology of a user plane function (I-UPF) in a time-sensitive network changes, an embodiment of the present specification proposes a method for controlling a packet forwarding policy under a TSN, a device, and a storage medium, which will be explained below.

First, a TSN framework involved in the method for controlling the packet forwarding policy under the TSN proposed in the embodiment of the present specification is explained.

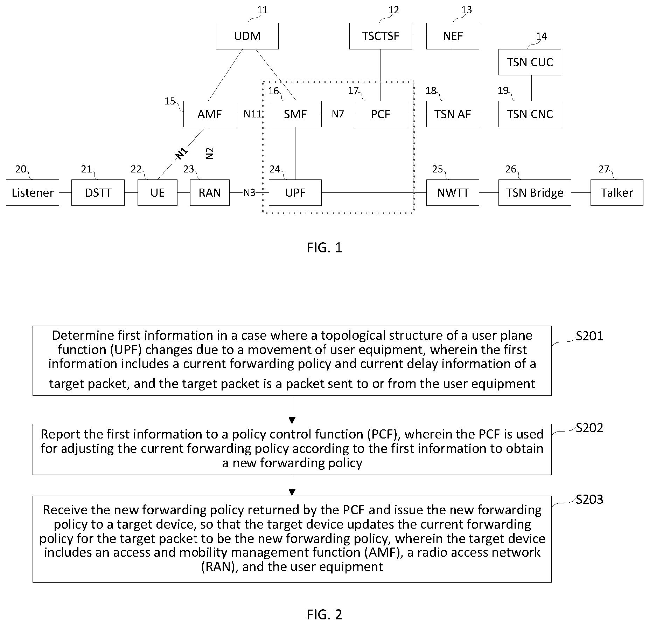

As shown in FIG. 1, the TSN framework provided in one embodiment of the present specification may include: unified data management (UDM) 11, a time sensitive communication and time synchronization function (TSCTSF) 12, a network element function (NEF) 13, a time-sensitive network control unit controller (TSN CUC) 14, an authentication management function (AMF) 15, a session management function (SMF) 16, a policy control function (PCF) 17, a time-sensitive network adaptation function (TSN AF) 18, a time-sensitive network congestion notification cell (TSN CNC) 19, a listener 20, an interface control module (DSTT) 21, user equipment (UE) 22, a radio access network (RAN) 23, a user plane function (UPF) 24, a TSN converter (NW-TT) 25, a TSN bridge 26, and a talker 27.

It should be noted that a network element involved in the method for controlling the packet forwarding policy under the TSN provided in the embodiments of the present specification includes the SMF16, the PCF17, and the UPF24 in FIG. 1. The method for controlling the packet forwarding policy under the TSN provided by the present specification is introduced below by taking the SMF, the PCF, and the UPF as examples.

First, the method for controlling the packet forwarding policy under the TSN provided in the embodiment of the present specification is explained.

As shown in FIG. 2, in one embodiment, the method for controlling the packet forwarding policy under the TSN provided in the present specification may be applied to an SMF (the SMF16 as shown in FIG. 1). The method may include:
Step 201: first information is determined in a case where a topological structure of a user plane function (UPF) changes due to a movement of user equipment, wherein the first information includes a current forwarding policy and current delay information of a target packet, and the target packet is a packet sent to or from the user equipment.

There are many scenarios where the topological structure of the UPF changes due to the movement of the user equipment. For different scenarios, the way for the SMF to determine the first information may vary. Four scenarios are listed below, and how the SMF determines the first information is illustrated in detail respectively in the four scenarios.

Scenario 1: the user equipment accesses one UPF due to the movement.

In scenario 1, determining the first information in a case where the topological structure of the user plane function (UPF) changes due to the movement of the user equipment may include: receiving second information reported by the UPF in a case where the user equipment accesses the UPF, wherein the second information includes packet detection rule information and current delay information of the target packet; and determining the first information according to the second information.

That is to say, after the user equipment goes online, the UPF reports PDRid and the current delay information to the SMF, and the SMF determines the second information based on this and forwards the second information to the PCF.

The packet detection rule information may include, but is not limited to, a packet detection rule ID (PDRID) of the target packet; and the current delay information may include, but is not limited to, a delay of the target packet on the UPF. The delay of the target packet on the UPF may be measured by the UPF, and then matched with the PDR ID to obtain a corresponding relationship between the PDR and the delay of the target packet on the UPF.

During specific implementation, the UPF may report the second information to the SMF through a packet forwarding control protocol (PFCP) session report request under an N4 interface. That is to say, the second information is reported by the UPF through the PFCP session report request on the N4 interface. Specifically, the UPF may add fields in the PFCP Session Report Request to report the PDRID and the current delay information. The relevant content of the newly added fields may refer to Table 1 below.

**Table 1**

| Message name | Field name | Data type | Meaning | Conditions |
|---|---|---|---|---|
| PFCP Session Report Request | PDRid | uint16 | packet detection rule ID | 0 selectable condition |
| | delayTime | uint64 | Current delay | 0 selectable condition |

Scenario 2: a new I-UPF is inserted due to the movement of the user equipment.

In scenario 2, determining the first information in a case where the topological structure of the user plane function (UPF) changes due to the movement of the user equipment may include:
receiving second information reported by the intermediate user plane function (I-UPF) in a case where the new I-UPF is inserted due to the movement of the user equipment, wherein the second information includes the packet detection rule information and the current delay information of the target packet; and determining the first information according to the second information.

Similarly, the packet detection rule information may include, but is not limited to, the packet detection rule ID (PDRID) of the target packet; and the current delay information may include, but is not limited to, the delay of the target packet on the UPF. The delay of the target packet on the UPF may be measured by the UPF, and then matched with the PDR ID to obtain a corresponding relationship between the PDR and the delay of the target packet on the UPF.

During specific implementation, the newly-inserted I-UPF may report the second information to the SMF through the packet forwarding control protocol (PFCP) session report request under the N4 interface. That is to say, the second information is reported by the newly-inserted I-UPF through the PFCP session report request on the N4 interface. Specifically, the newly-inserted I-UPF may add fields in the PFCP Session Report Request to report the PDRID and the current delay information. The relevant content of the newly added fields may refer to Table 1 above.

Scenario 3: the I-UPF is transformed due to the movement of the user equipment.

In scenario 3, determining the first information in a case where the topological structure of the user plane function (UPF) changes due to the movement of the user equipment may include:
receiving second information reported by a transformed I-UPF in a case where the I-UPF is transformed due to the movement of the user equipment, wherein the second information includes the packet detection rule (PDR) information and the current delay information of the target packet; and determining the first information according to the second information.

That is to say, when transforming the I-UPF, the transformed I-UPF reports PDRid and the current delay information to the SMF, and the SMF determines the second information based on this and forwards the second information to the PCF.

Similarly, the packet detection rule information may include, but is not limited to, the packet detection rule ID (PDRID) of the target packet; and the current delay information may include, but is not limited to, the delay of the target packet on the UPF. The delay of the target packet on the UPF may be measured by the UPF, and then matched with the PDR ID to obtain the corresponding relationship between the PDR and the delay of the target packet on the UPF.

During specific implementation, the transformed I-UPF may report the second information to the SMF through the packet forwarding control protocol (PFCP) session report request under the N4 interface. That is to say, the second information is reported by the transformed I-UPF through the PFCP session report request on the N4 interface. Specifically, the transformed I-UPF may add fields in the PFCP Session Report Request to report the PDRID and the current delay information. The relevant content of the newly added fields may refer to Table 1 above.

Certainly, in addition to the PFCP Session Report Request, the UPF accessed by the UE/the newly-inserted I-UPF/the transformed I-UPF may further report the second information to the SMF through other messages.

Scenario 4: the I-UPF is removed due to the movement of the user equipment.

In scenario 4, determining the first information in a case where the topological structure of the user plane function (UPF) changes due to the movement of the user equipment may include:
determining the first information by the SMF in a case where the I-UPF is removed due to the movement of the user equipment, wherein the first information is determined by the SMF itself.

That is to say, when removing the I-UPF, the SMF calculates the PDRid and the current delay information, determines the second information based on this and forwards the second information to the PCF.

The first information may specifically include a current policy and charging control rule ID (pccRuleID) and the current delay information (delayTime) of the target packet.

As a specific example, the content of the first information may be shown in Table 2 below.

**Table 2**

| Message name | Field name | Data type | Meaning | Conditions |
|---|---|---|---|---|
| Npcf.SMPolicyControl.Up dateRequest | pccRuleID | string | Policy control rule ID | 0 selectable condition |
| | delayTime | uint64 | Delay | 0 selectable condition |

Step 202: the first information is reported to the policy control function (PCF), wherein the PCF is used for adjusting the current forwarding policy according to the first information to obtain a new forwarding policy.

During specific implementation, the SMF may report the first information to the PCF through a session management policy update request (Npcf.SMPolicyControl.UpdateRequest message) on an N7 interface. Certainly, the SMF may also report the first information to the PCF through other messages.

It may be understood that for scenario 2 above, if the packet forwarding policy is not adjusted, the delay of the target packet increases due to the lengthening of a forwarding path; for scenario 3 above, if the packet forwarding policy is not adjusted, the delay of the target packet increases or decreases due to changes in the forwarding path; and for scenario 4 above, if the packet forwarding policy is not adjusted, the delay of the target packet decreases due to the shortening of the forwarding path. This is intolerable for the TSN, and therefore, the current forwarding policy needs to be adjusted.

For different scenarios, the way for the PCF to adjust the forwarding policy may vary. Here are two examples below.

In a first example, in a case where the current delay of the target packet is greater than a TSN requirement, the precedence of the policy control rule in the current forwarding policy is increased, so that the packet of the user equipment is forwarded preferentially. Alternatively, in a case where the current delay of the target packet is greater than the TSN requirement, a packet delay budget (packetDelayBudget) under a quality of service requirement (QosData) in the current forwarding policy is decreased. The function of this parameter is to require a base station to complete packet forwarding within a specified time. By modifying this parameter and subtracting the additional delay caused by inserting the I-UPF, it can be ensured that the delay of the packet meets the TSN requirement.

In a second example, in a case where the current delay of the target packet is less than the TSN requirement, the precedence of the policy control rule in the current forwarding policy is decreased, so that the packet of the user equipment is forwarded later. Alternatively, in a case where the current delay of the target packet is less than the TSN requirement, the packet delay budget (packetDelayBudget) under the quality of service requirement (QosData) in the current forwarding policy is increased. The function of this parameter is to require the base station to complete packet forwarding within the specified time. By modifying this parameter and increasing the delay reduced by removing the I-UPF, it can be ensured that the delay of the packet meets the TSN requirement.

Step 203: the new forwarding policy returned by the PCF is received and issued to a target device, so that the target device updates the current forwarding policy for the target packet to be the new forwarding policy, wherein the target device includes an access and mobility management function (AMF), a radio access network (RAN), and the user equipment.

During specific implementation, the PCF may return the new forwarding policy to the SMF through a session management policy update response (Npcf.SMPolicyControl.UpdateResponse message). Certainly, the PCF may also return the new forwarding policy to the SMF through other messages.

It can be understood that the adjusted new forwarding policy is issued to the AMF, the RAN, and the user equipment, and the AMF, the RAN, and the user equipment update the current forwarding policy for the target packet to the new forwarding policy, so that the AMF, the RAN, and the user equipment forward the target packet according to the new forwarding policy, and thus the delay of the target packet can be well ensured, thereby ensuring the quality of service.

That is to say, according to the method for controlling the packet forwarding policy under the TSN provided by the embodiment of the present specification, since the SMF may determine the first information and report the first information to the policy control function (PCF) in a case where the topological structure of the user plane function (UPF) changes due to the movement of the user equipment, the first information includes the current forwarding policy and the current delay information of the target packet, and the target packet is the packet sent to or from the user equipment, the PCF adjusts the current forwarding policy according to the first information to obtain the new forwarding policy and feed the new forwarding policy back to the SMF, and then the SMF issues the new forwarding policy to the access and mobility management function (AMF), the radio access network (RAN) and the user equipment. Thus, these devices update the current forwarding policy for the target packet to the new forwarding policy, so as to forward the target packet according to the adjusted forwarding policy. Therefore, in a case where the topological structure of the UPF changes, the delay of the target packet can be ensured, and the quality of service is improved.

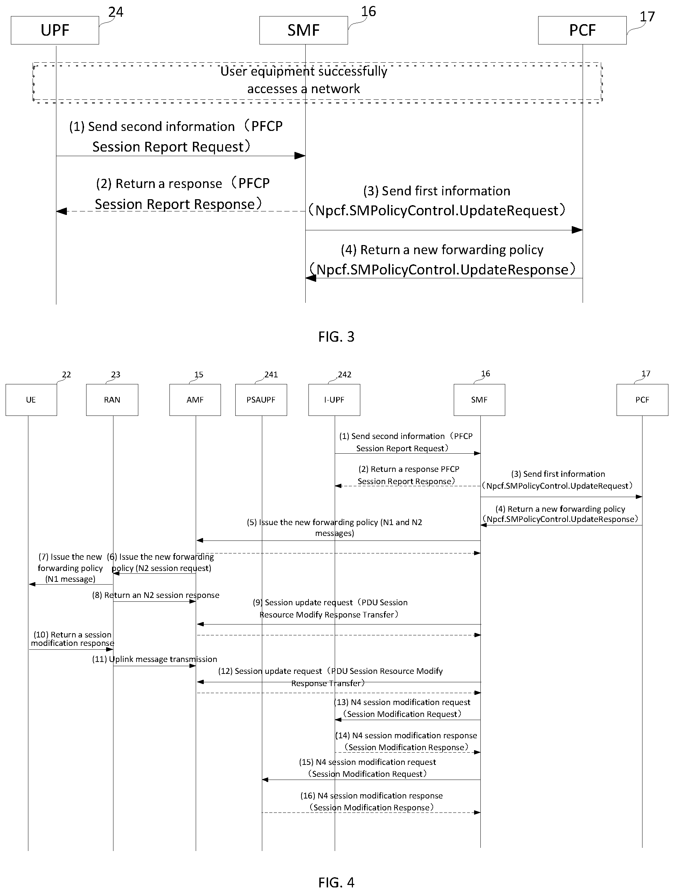

A schematic diagram of an interaction process of the method for controlling the packet forwarding policy under the TSN provided in the present specification under the four scenarios mentioned above is illustrated below with reference to FIG. 3, FIG. 4, and FIG. 5.

In scenario 1 (user equipment accesses one UPF due to a movement), as shown in FIG. 3, the method for controlling the packet forwarding policy under the TSN provided in the present specification may include the following steps.
○,1 In a case where the user equipment successfully accesses a UPF24, the UPF24 reports second information to an SMF16 through an N4 session report request (PFCP Session Report Request message).

The second information includes PDRid and current delay information.
○,2 The SMF16 saves the second information and returns a report response to the UPF24 through an N4 session report response (PFCP Session Report Response message).
○,3 The SMF16 determines first information according to the second information and reports the first information to a PCF17 through a session policy update request (Npcf.SMPolicyControl.UpdateRequest message) on an N7 interface.

The first information includes pccRuleID and current delay information.
○,4 The PCF17 returns a new forwarding policy to the SMF16 through a session management policy update response (Npcf.SMPolicyControl.UpdateResponse message).

For example, after a 5G user accesses the UPF24, the UPF24 reports the second information to the SMF16, and the SMF16 determines the first information according to the second information and reports the first information to the PCF17. Subsequently, the PCF17 issues the new forwarding policy normally.

In scenario 2 (a new I-UPF is inserted due to a movement of user equipment) or scenario 3 (an I-UPF is transformed due to the movement of the user equipment), as shown in FIG. 4, the method for controlling the packet forwarding policy under the TSN provided in the present specification may include the following steps.
○,1 In a case where a new I-UPF242 is inserted due to a position change of UE22, or in a case where the I-UPF is replaced due to the position change of the UE22 and the new I-UPF is I-UPF242, the I-UPF242 reports the second information to the SMF16 through an N4 session report request (PFCP Session Report Request message).

The second information includes PDRid and current delay information.
○,2 An SMF16 saves the second information and returns a report response to the I-UPF242 through an N4 session report response (PFCP Session Report Response message).
○,3 The SMF16 determines first information according to the second information and reports the first information to a PCF17 through a session policy update request (Npcf.SMPolicyControl.UpdateRequest message) on an N7 interface.

The first information includes pccRuleID and current delay information.
○,4 The PCF17 returns a new forwarding policy to the SMF16 through a session management policy update response (Npcf.SMPolicyControl.UpdateResponse message).

As an example, the new forwarding policy may include, but is not limited to, a precedence and a packet delay budget (packetDelayBudget).
○,5 The SMF16 issues the new forwarding policy to an AMF15.

Specifically, the new forwarding policy may be issued to the AMF15 through an N1 message (e.g., N2 PDU Session Resource Modify Request Transfer) and an N2 message (e.g., N2 PDU Session Modification Command). PDU refers to a packet data unit.
○,6 The AMF15 issues the new forwarding policy (including the N1 message and the N2 message) to an RAN23 through an N2 session request.
○,7 The RAN23 issues the N1 message to the UE22.

The N1 message carries a resource modification (AN-specificresource modification), including a session modification request/a session modification response (include PDU Session Modification Command/Ack).
○,8 The RAN23 returns an N2 session response to the AMF15.
○,9 The AMF15 feeds the N2 session response returned by the AMF15 back to the SMF16 through a session update request (PDU Session Resource Modify Response Transfer).
○,10 The UE22 returns a session modification response (PDU Session Modification Command Ack) to the RAN23.
○,11 The RAN23 transparently transmits a session modification complete (PDU Session Modification Complete) response returned by the UE22 to the AMF15.
○,12 The AMF15 transparently transmits the session modification response returned by the UE22 to the SMF16 through the session update request (PDU Session Resource Modify Response Transfer).
○,13 The AMF15 sends an N4 session modification request (N4 Session Modification Request message) to the I-UPF242, so that the I-UPF242 modifies the packet forwarding policy.
○,14 The I-UPF242 returns an N4 session modification response (N4 Session Modification Response message) to the AMF15.
○,15 The AMF15 sends an N4 session modification request (N4 Session Modification Request message) to a PSAUPF241, so that the I-UPF242 modifies the packet forwarding policy.
○,16 The PSAUPF241 returns an N4 session modification response (N4 Session Modification Response message) to the AMF15.

PSA refers to a PDU session anchor.

That is to say, when the new I-UPF242 is inserted due to the position change of the UE22, the I-UPF242 may report the PDRid and the current delay information to the SMF16. The SMF16 may determine the pccRuleID and the current delay information according to the PDRid and the current delay information, and report the pccRuleID and the current delay information to the PCF17. The PCF17 issues the new forwarding policy in the response message according to the pccRuleID and the current delay information. Alternatively, when the I-UPF is transformed due to the position change of the UE22, the new I-UPF242 may report the PDRid and the current delay information to the SMF16. The SMF16 may determine the pccRuleID and the current delay information according to the PDRid and the current delay information, and report the pccRuleID and the current delay information to the PCF17. The PCF17 issues the new forwarding policy in the response message according to the pccRuleID and the current delay information.

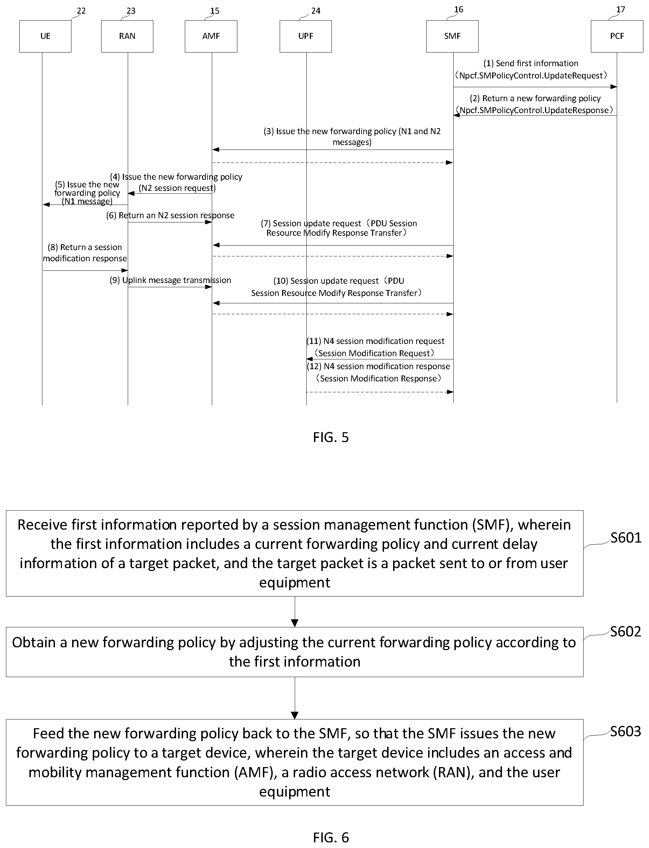

In scenario 4 (an I-UPF is removed due to a movement of user equipment), as shown in FIG. 5, the method for controlling the packet forwarding policy under the TSN provided in the present specification may include the following steps.
○,1 An SMF16 determines first information and reports the first information to a PCF17 through a session policy update request (Npcf.SMPolicyControl.UpdateRequest message) on an N7 interface.

The first information includes pccRuleID and current delay information.
○,2 The PCF17 returns a new forwarding policy to the SMF16 through a session management policy update response (Npcf.SMPolicyControl.UpdateResponse message).

As an example, the new forwarding policy may include, but is not limited to, a precedence and a packet delay budget (packetDelayBudget).
○,3 The SMF16 issues the new forwarding policy to an AMF15.

Specifically, the new forwarding policy may be issued to the AMF15 through an N1 message (e.g., N2 PDU Session Resource Modify Request Transfer) and an N2 message (e.g., N2 PDU Session Modification Command). PDU refers to a packet data unit.
○,4 The AMF15 issues the new forwarding policy (including the N1 message and the N2 message) to an RAN23 through an N2 session request.
○,5 The RAN23 issues the N1 message to the UE22.

The N1 message includes a resource modification (AN-specificresource modification), specifically including a session modification request/a session modification response (include PDU Session Modification Command/Ack).
○,6 The RAN23 returns an N2 session response to the AMF15.
○,7 The AMF15 feeds the N2 session response returned by the AMF15 back to the SMF16 through a session update request (PDU Session Resource Modify Response Transfer).
○,8 The UE22 returns a session modification response (PDU Session Modification Command Ack) to the RAN23.
○,9 The RAN23 transparently transmits a session modification complete (PDU Session Modification Complete) response returned by the UE22 to the AMF15.
○,10 The AMF15 transparently transmits the session modification response returned by the UE22 to the SMF16 through the session update request (PDU Session Resource Modify Response Transfer).
○,11 The AMF15 sends an N4 session modification request (N4 Session Modification Request message) to a UPF24, so that the UPF24 modifies the packet forwarding policy.
○,12 The UPF24 returns an N4 session modification response (N4 Session Modification Response message) to the AMF15.

That is to say, when the I-UPF is removed due to the position change of the UE22, the SMF16 may perceive an ID of the removed I-UPF. After processing, the SMF16 reports the ID to the PCF17, and the PCF17 issues the new forwarding policy in the response message.

From the above four scenarios, it can be seen that after using the method for controlling the forwarding policy under the TSN provided by the embodiment of the present specification, the PCF may be triggered to issue the new packet forwarding policy when the topology of the UPF changes due to the position movement of the user equipment, and thus it is ensured that the delay of a packet is not affected. This method can specifically achieve at least one of the following effects.
1) When the delay of the packet changes due to the change in the topological structure of the UPF, this method can ensure the accuracy of the delay of the packet and improve the quality of service.
2) After this method is implemented, the TSN can support scenarios where the topology of the UPF changes, thus the application range of products is expanded, and product competitiveness is improved.

Regarding the changes in the topological structure of the UPF, two specific examples are given below to help understand.

Example 1: assuming that a certain industrial park is located at a junction of two UPF service ranges, and there are mobile terminals using the TSN in the industrial park, there may be a scenario where the I-UPF changes. In this scenario, applying the method for controlling the forwarding policy under the TSN provided in the present specification can ensure network delay and ensure the quality of service.

Example 2: assuming that a certain industrial park has trans-provincial partitions, and TSN users need to work back and forth between a main park and a sub park, there may be a scenario where the I-UPF changes. In this scenario, applying the method for controlling the forwarding policy under the TSN provided by the present specification can also ensure the network delay and ensure the quality of service.

As shown in FIG. 6, in another embodiment, a method for controlling a packet forwarding policy under a TSN provided in the present specification may be applied to a PCF (the PCF17 as shown in FIG. 1). The method may include:
step 601: first information reported by a session management function (SMF) is received, wherein the first information includes a current forwarding policy and current delay information of a target packet, and the target packet is a packet sent to or from user equipment.

The first information may specifically include a current policy and charging control rule ID (pccRuleID) and the current delay information (delayTime) of the target packet.

Specifically, the first information reported by the SMF through a session management policy update request on an N7 interface may be received.

Step 602: a new forwarding policy is obtained by adjusting the current forwarding policy according to the first information.

Step 602 may include: determining, according to the first information, whether a current delay of the target packet meets a TSN requirement; obtaining the new forwarding policy by adjusting the current forwarding policy in a case where the current delay of the target packet does not meet the TSN requirement; and ending this process in a case where the current delay of the target packet meets the TSN requirement.

It may be understood that for scenario 2 above, if the packet forwarding policy is not adjusted, the delay of the target packet increases due to the lengthening of a forwarding path; for scenario 3 above, if the packet forwarding policy is not adjusted, the delay of the target packet increases or decreases due to changes in the forwarding path; and for scenario 4 above, if the packet forwarding policy is not adjusted, the delay of the target packet decreases due to the shortening of the forwarding path. This is intolerable for the TSN, and therefore, the current forwarding policy needs to be adjusted.

Exemplarily, obtaining the new forwarding policy by adjusting the current forwarding policy according to the first information may include:
increasing, in a case where the current delay of the target packet is greater than the TSN requirement, a precedence of a policy control rule in the current forwarding policy, and/or decreasing a packet delay budget in the current forwarding policy under a quality of service requirement; and
decreasing, in a case where the current delay of the target packet is less than the TSN requirement, the precedence of the policy control rule in the current forwarding policy, and/or increasing the packet delay budget in the current forwarding policy under the quality of service requirement.

Step 603: the new forwarding policy is fed back to the SMF, so that the SMF issues the new forwarding policy to a target device, wherein the target device includes an access and mobility management function (AMF), a radio access network (RAN), and the user equipment.

Specifically, the new forwarding policy may be fed back to the SMF through a session management policy update response.

In the embodiment of the present specification, since the session management function (SMF) may determine the first information and report the first information to the policy control function (PCF) in a case where the topological structure of the user plane function (UPF) changes due to the movement of the user equipment, the first information includes the current forwarding policy and the current delay information of the target packet, and the target packet is the packet sent to or from the user equipment, the PCF adjusts the current forwarding policy according to the first information to obtain the new forwarding policy and feed the new forwarding policy back to the SMF, and then the SMF issues the new forwarding policy to the access and mobility management function (AMF), the radio access network (RAN) and the user equipment. Thus, these devices update the current forwarding policy for the target packet to the new forwarding policy, so as to forward the target packet according to the adjusted forwarding policy. Therefore, in a case where the topological structure of the UPF changes, the delay of the target packet can be ensured, and the quality of service is improved.

In another embodiment, a method for controlling a packet forwarding policy under a TSN provided in the present specification may be applied to a UPF (the UPF24 as shown in FIG. 1). The method may include:
reporting second information to a session management function (SMF) in a case where a topological structure of the UPF changes.

The second information includes packet detection rule information and current delay information of a target packet from or sent to user equipment, the second information is used by the SMF to determine first information, the first information includes a current forwarding policy and the current delay information of the target packet, and the first information is used by a policy control function (PCF) to adjust the current forwarding policy.

The UPF may include, but is not limited to, one of the following: a UPF accessed by the user equipment; a new intermediate user plane function (I-UPF) inserted due to a movement of the user equipment; or a transformed intermediate user plane function (I-UPF) due to a movement of the user equipment.

Reporting the second information to the session management function (SMF) includes: reporting the second information to the SMF through a packet forwarding control protocol (PFCP) session report request on an N4 interface.

The second information includes: a PDR ID and the current delay information of the target packet.

In a case where the UPF changes, reporting the second information to the SMF can facilitate the SMF in determining the first information and reporting the first information to the PCF, so that the PCF determines the new packet forwarding policy suitable for the changed topological structure of the UPF, thereby ensuring the delay of the target packet and improving the quality of service.

The above describes the method for controlling the packet forwarding policy under the TSN provided in the present specification. Corresponding to the method embodiment above, the present specification further proposes an apparatus for controlling a packet forwarding policy under a TSN, which will be introduced below.

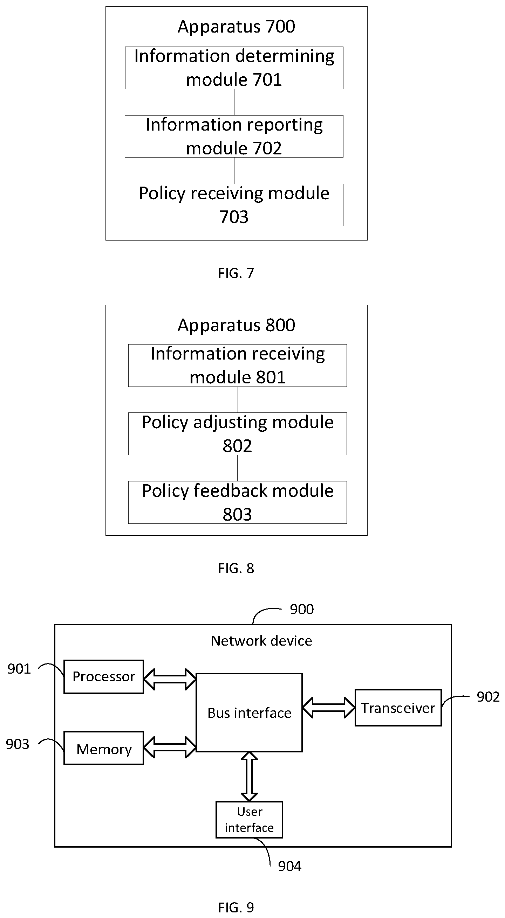

FIG. 7 shows a schematic structural diagram of an apparatus for controlling a packet forwarding policy under a TSN provided by an embodiment of the present specification. The apparatus may be applied to an SMF. As shown in FIG. 7, the apparatus 700 may include: an information determining module 701, an information reporting module 702, and a policy receiving module 703.

The information determining module 701 is configured to determine first information in a case where a topological structure of a user plane function (UPF) changes due to a movement of user equipment, wherein the first information includes a current forwarding policy and current delay information of a target packet, and the target packet is a packet sent to or from the user equipment.

There are many scenarios where the topological structure of the UPF changes due to the movement of the user equipment. For different scenarios, the way for the SMF to determine the first information may vary. Four scenarios are listed below, and how the SMF determines the first information is illustrated in detail respectively in the four scenarios.

Scenario 1: the user equipment accesses one UPF due to the movement.

In scenario 1, the information determining module 701 may be configured to: receive second information reported by the UPF in a case where the user equipment accesses the UPF, wherein the second information includes packet detection rule information and current delay information of the target packet; and determine the first information according to the second information.

That is to say, after the user equipment goes online, the UPF reports PDRid and the current delay information to the SMF, and the SMF determines the second information based on this and forwards the second information to the PCF.

The packet detection rule information may include, but is not limited to, a packet detection rule ID (PDRID) of the target packet; and the current delay information may include, but is not limited to, a delay of the target packet on the UPF. The delay of the target packet on the UPF may be measured by the UPF, and then matched with the PDR ID to obtain a corresponding relationship between the PDR and the delay of the target packet on the UPF.

During specific implementation, the UPF may report the second information to the SMF through a packet forwarding control protocol (PFCP) session report request under an N4 interface. That is to say, the second information is reported by the UPF through the PFCP session report request on the N4 interface. Specifically, the UPF may add fields in the PFCP Session Report Request to report the PDRID and the current delay information.

Scenario 2: a new I-UPF is inserted due to the movement of the user equipment.

In scenario 2, the information determining module 701 may be configured to: receive second information reported by the intermediate user plane function (I-UPF) in a case where the new I-UPF is inserted due to the movement of the user equipment, wherein the second information includes the packet detection rule information and the current delay information of the target packet; and determine the first information according to the second information.

Similarly, the packet detection rule information may include, but is not limited to, the packet detection rule ID (PDRID) of the target packet; and the current delay information may include, but is not limited to, the delay of the target packet on the UPF. The delay of the target packet on the UPF may be measured by the UPF, and then matched with the PDR ID to obtain the corresponding relationship between the PDR and the delay of the target packet on the UPF.

During specific implementation, the newly-inserted I-UPF may report the second information to the SMF through the packet forwarding control protocol (PFCP) session report request under the N4 interface. That is to say, the second information is reported by the newly-inserted I-UPF through the PFCP session report request on the N4 interface. Specifically, the newly-inserted I-UPF may add fields in the PFCP Session Report Request to report the PDRID and the current delay information. The relevant content of the newly added fields may refer to Table 1 above.

Scenario 3: the I-UPF is transformed due to the movement of the user equipment.

In scenario 3, the information determining module 701 may be configured to: receive second information reported by a transformed I-UPF in a case where the I-UPF is transformed due to the movement of the user equipment, wherein the second information includes the packet detection rule (PDR) information and the current delay information of the target packet; and determine the first information according to the second information.

That is to say, when transforming the I-UPF, the transformed I-UPF reports PDRid and the current delay information to the SMF, and the SMF determines the second information based on this and forwards the second information to the PCF.

Similarly, the packet detection rule information may include, but is not limited to, the packet detection rule ID (PDRID) of the target packet; and the current delay information may include, but is not limited to, the delay of the target packet on the UPF. The delay of the target packet on the UPF may be measured by the UPF, and then matched with the PDR ID to obtain the corresponding relationship between the PDR and the delay of the target packet on the UPF.

During specific implementation, the transformed I-UPF may report the second information to the SMF through the packet forwarding control protocol (PFCP) session report request under the N4 interface. That is to say, the second information is reported by the transformed I-UPF through the PFCP session report request on the N4 interface. Specifically, the transformed I-UPF may add fields in the PFCP Session Report Request to report the PDRID and the current delay information. The relevant content of the newly added fields may refer to Table 1 above.

Certainly, in addition to the PFCP Session Report Request, the UPF accessed by the UE/the newly-inserted I-UPF/the transformed I-UPF may further report the second information to the SMF through other messages.

Scenario 4: the I-UPF is removed due to the movement of the user equipment.

In scenario 4, the information determining module 701 may be configured to: determine the first information by the SMF in a case where the I-UPF is removed due to the movement of the user equipment, wherein the first information is determined by the SMF itself.

That is to say, when removing the I-UPF, the SMF calculates the PDRid and the current delay information, determines the second information based on this and forwards the second information to the PCF.

The first information may specifically include a current policy and charging control rule ID (pccRuleID) and the current delay information (delayTime) of the target packet.

The information reporting module 702 is configured to report the first information to a policy control function (PCF), wherein the PCF is used for adjusting the current forwarding policy according to the first information to obtain a new forwarding policy.

During specific implementation, the information reporting module 702 may report the first information to the PCF through a session management policy update request (Npcf.SMPolicyControl.UpdateRequest message) on an N7 interface. Certainly, the SMF may also report the first information to the PCF through other messages.

It may be understood that for scenario 2 above, if the packet forwarding policy is not adjusted, the delay of the target packet increases due to the lengthening of a forwarding path; for scenario 3 above, if the packet forwarding policy is not adjusted, the delay of the target packet increases or decreases due to changes in the forwarding path; and for scenario 4 above, if the packet forwarding policy is not adjusted, the delay of the target packet decreases due to the shortening of the forwarding path. This is intolerable for the TSN, and therefore, the current forwarding policy needs to be adjusted.

For different scenarios, the way for the PCF to adjust the forwarding policy may vary. Here are two examples below.

In a first example, in a case where the current delay of the target packet is greater than a TSN requirement, the precedence of the policy control rule in the current forwarding policy is increased, so that the packet of the user equipment is forwarded preferentially. Alternatively, in a case where the current delay of the target packet is greater than the TSN requirement, a packet delay budget (packetDelayBudget) under a quality of service requirement (QosData) in the current forwarding policy is decreased. The function of this parameter is to require a base station to complete packet forwarding within a specified time. By modifying this parameter and subtracting the additional delay caused by inserting the I-UPF, it can be ensured that the delay of the packet meets the TSN requirement.

In a second example, in a case where the current delay of the target packet is less than the TSN requirement, the precedence of the policy control rule in the current forwarding policy is decreased, so that the packet of the user equipment is forwarded later. Alternatively, in a case where the current delay of the target packet is less than the TSN requirement, the packet delay budget (packetDelayBudget) under the quality of service requirement (QosData) in the current forwarding policy is increased. The function of this parameter is to require the base station to complete packet forwarding within the specified time. By modifying this parameter and increasing the delay reduced by removing the I-UPF, it can be ensured that the delay of the packet meets the TSN requirement.

The policy receiving module 703 is configured to receive the new forwarding policy returned by the PCF and issue the new forwarding policy to a target device, so that the target device updates the current forwarding policy for the target packet to be the new forwarding policy, wherein the target device includes an access and mobility management function (AMF), a radio access network (RAN), and the user equipment.

According to the apparatus for controlling the packet forwarding policy under the TSN provided by the embodiment shown in FIG. 7, the first information may be determined and reported to the policy control function (PCF) in a case where the topological structure of the user plane function (UPF) changes due to the movement of the user equipment, the first information includes the current forwarding policy and the current delay information of the target packet, and the target packet is the packet sent to or from the user equipment, so that the PCF adjusts the current forwarding policy according to the first information to obtain the new forwarding policy and feed the new forwarding policy back to the SMF, and then the SMF issues the new forwarding policy to the access and mobility management function (AMF), the radio access network (RAN) and the user equipment. Thus, these devices update the current forwarding policy for the target packet to the new forwarding policy, so as to forward the target packet according to the adjusted forwarding policy. Therefore, in a case where the topological structure of the UPF changes, the delay of the target packet can be ensured, and the quality of service is improved.

The apparatus shown in FIG. 7 may be used to implement various embodiments of the method for controlling the packet forwarding policy under the TSN shown in FIG. 2. For relevant details, please refer to the above method embodiments.

FIG. 8 shows a schematic structural diagram of an apparatus for controlling a packet forwarding policy under a TSN provided by an embodiment of the present specification. The apparatus may be applied to a PCF. As shown in FIG. 8, the apparatus 800 may include: an information receiving module 801, a policy adjusting module 802, and a policy feedback module 803.

The information receiving module 801 is configured to receive first information reported by a session management function (SMF), wherein the first information includes a current forwarding policy and current delay information of a target packet, and the target packet is a packet sent to or from user equipment.

The first information may specifically include a current policy and charging control rule ID (pccRuleID) and the current delay information (delayTime) of the target packet.

The policy adjusting module 802 is configured to obtain a new forwarding policy by adjusting the current forwarding policy according to the first information.

Exemplarily, the policy adjusting module 802 may be configured to: increase, in a case where the current delay of the target packet is greater than the TSN requirement, a precedence of a policy control rule in the current forwarding policy, and/or decrease a packet delay budget in the current forwarding policy under a quality of service requirement; and decrease, in a case where the current delay of the target packet is less than the TSN requirement, the precedence of the policy control rule in the current forwarding policy, and/or increase the packet delay budget in the current forwarding policy under the quality of service requirement.

The policy feedback module 803 is configured to feed the new forwarding policy back to the SMF, so that the SMF issues the new forwarding policy to a target device, wherein the target device includes an access and mobility management function (AMF), a radio access network (RAN), and the user equipment.

The apparatus shown in FIG. 8 may be used to implement various embodiments of the method for controlling the packet forwarding policy under the TSN shown in FIG. 6 and achieve the same technical effects. For relevant details, please refer to the above method embodiments, which is omitted.

In another embodiment, an apparatus for controlling a packet forwarding policy under a TSN provided in the present specification may be applied to a UPF (the UPF24 as shown in FIG. 1). The apparatus may include: an information reporting module, configured to report second information to a session management function (SMF) in a case where a topological structure of the UPF changes.

The second information includes packet detection rule information and current delay information of a target packet from or sent to user equipment, the second information is used by the SMF to determine first information, the first information includes a current forwarding policy and the current delay information of the target packet, and the first information is used by a policy control function (PCF) to adjust the current forwarding policy.

The UPF may include, but is not limited to, one of the following: a UPF accessed by the user equipment; a new intermediate user plane function (I-UPF) inserted due to a movement of the user equipment; or
a transformed intermediate user plane function (I-UPF) due to a movement of the user equipment.

Reporting the second information to the session management function (SMF) includes: reporting the second information to the SMF through a packet forwarding control protocol (PFCP) session report request on an N4 interface.

The second information includes: a PDR ID and the current delay information of the target packet.

In a case where the UPF changes, reporting the second information to the SMF can facilitate the SMF in determining the first information and reporting the first information to the PCF, so that the PCF determines the new packet forwarding policy suitable for the changed topological structure of the UPF, thereby ensuring the delay of the target packet and improving the quality of service.

Referring to FIG. 9, FIG. 9 is a structural diagram of a network device applied in the embodiments of the present specification. The network device can achieve the details of the above method for controlling the packet forwarding policy under the TSN and achieve the same effects. As shown in FIG. 9, the network device 900 includes: a processor 901, a transceiver 902, a memory 903, a user interface 904, and a bus interface.

In the embodiments of the present specification, the network device 900 further includes: a computer program stored on the memory 903 and runnable on the processor 901. The computer program, when executed by the processor 901, implements the various processes of the above method for controlling the packet forwarding policy under the TSN, and can achieve the same technical effects, which is omitted here to avoid repetitions.

In FIG. 9, a bus architecture may include any number of interconnected buses and bridges, which are specifically linked together by various circuits of at least one processor represented by the processor 901 and a memory represented by the memory 903. The bus architecture may further link various other circuits such as a peripheral device, a voltage stabilizer and a power management circuit together, which are publicly known in the art and therefore are not further described herein. The bus interface provides an interface. The transceiver 902 may be a plurality of elements, including a transmitter and a receiver, that provide a unit for communicating with various other apparatuses over a transmission medium. For different user equipment, the user interface 904 may further be an interface capable of being externally connected and internally connected with a required device, and the connected device includes, but is not limited to, a keypad, a display, a speaker, a microphone, a joystick, and the like.

The processor 901 is responsible for managing the bus architecture and usual processing, and the memory 903 may store data used by the processor 901 during operation execution.

It can be understood that these embodiments described in the embodiments of the present specification can be implemented using hardware, software, firmware, middleware, microcode, or a combination thereof. For hardware implementation, a processing unit may be implemented in at least one application specific integrated circuits (ASIC), digital signal processing (DSP), DSP device (DSPD), programmable logic device (PLD), field-programmable gate array (FPGA), general-purpose processor, controller, microcontroller, microprocessor, other electronic units or combinations thereof used to perform the functions described in the present disclosure.

For software implementation, the technology described in the embodiments of the present specification can be implemented through the modules (such as procedures and functions) that perform the functions described in the embodiments of the present specification. Software codes may be stored in the memory and executed by the processor. The memory may be implemented inside or outside the processor.

An embodiment of the present specification further provides a computer-readable storage medium, a computer program is stored on the computer-readable storage medium, and the computer program, when executed by a processor, implements various processes of the above embodiment of the method for controlling the packet forwarding policy under the TSN and can achieve the same technical effects, which is omitted here to avoid repetitions. The computer-readable storage medium is, for example, a read-only memory (ROM for short), a random access memory (RAM for short), a magnetic disk, or an optical disc.

An embodiment of the present specification further provides a computer program product including instructions. When a computer runs instructions of the computer program product, the computer performs the above method for controlling the packet forwarding policy under the TSN. Specifically, the computer program product may run on the above network device.

Those ordinarily skilled in the art may realize that, units and algorithm steps of the examples described in the disclosed embodiments herein can be implemented by electronic hardware, or a combination of the computer software or the electronic hardware. Whether these functions are executed in a mode of the hardware or the software depends on particular applications and design constraint conditions of the technical solutions. Professional technicians may use different methods to implement the described functions for each particular application, but such implementation is not to be regarded as beyond the scope of the present specification.

Those skilled in the art may clearly understand that, for the convenience and simplicity of description, a specific working process of the above described system, apparatus and unit may refer to the corresponding process in the aforementioned method embodiments, and will not be repeated here.

In several embodiments provided in the present specification, it should be understood that the disclosed system, apparatus and method may be implemented in other ways. For example, the apparatus embodiment described above is merely schematic. For example, the division of units is merely logical function division and may be other division in actual implementation. For example, a plurality of units or components may be combined or integrated into another system, or some features may be ignored or not performed. In addition, the displayed or discussed mutual couplings or direct couplings or communication connections may be via some interfaces, and the indirect couplings or communication connections between the apparatuses or units may be in electric, mechanical, or other manners.

The units described as separate parts may be or may not be physically separate, and the parts displayed as units may be or may not be physical units, may be located in one position, or may be distributed on a plurality of network units. Part or all of the units may be selected according to actual needs to achieve the objectives of the solutions of the embodiments.

In addition, each functional unit in each embodiment of the present specification may be integrated into one processing unit, or each unit may exist physically alone, or two or more units may be integrated into one unit.

The function, if implemented in the form of a software functional unit and sold or used as an independent product, may be stored in a computer-readable storage medium. Based on such understanding, the technical solutions of the present specification essentially, or parts contributing to the prior art, or part of the technical solutions can be embodied in a software product form. The computer software product is stored in a storage medium, including a plurality of instructions used to cause one computer device (may be a personal computer, a server, a network device, etc.) to perform all or part of the steps of the methods in all the embodiments of the present specification. The aforementioned storage medium includes: a USB flash disk, a mobile hard disk, a read-only memory (ROM), a random access memory (RAM), a magnetic disk or an optical disk and other media that can store program codes.

The above is merely a specific implementation of the present specification, but the scope of protection of the present specification is not limited to this. Variations or replacements that may be easily figured out by technical personnel familiar with the technical field within the technical scope disclosed in the present specification needs to be covered within the scope of protection of the present specification. Therefore, the scope of protection of the present specification should be subject to the scope of protection of the claims.

## Claims

1. A method for controlling a packet forwarding policy under a time-sensitive network TSN, applied to a session management function SMF, comprising:
determining first information in a case where a topological structure of a user plane function UPF changes due to a movement of user equipment, wherein the first information comprises a current forwarding policy and current delay information of a target packet, and the target packet is a packet sent to or from the user equipment;
reporting the first information to a policy control function PCF, wherein the PCF is used for adjusting the current forwarding policy according to the first information to obtain a new forwarding policy; and
receiving the new forwarding policy returned by the PCF and issuing the new forwarding policy to a target device, so that the target device updates the current forwarding policy for the target packet to be the new forwarding policy, wherein the target device comprises an access and mobility management function AMF, a radio access network RAN, and the user equipment.

2. The method according to claim 1, wherein determining the first information in a case where the topological structure of the user plane function UPF changes due to the movement of the user equipment comprises:
receiving second information reported by the UPF in a case where the user equipment accesses the user plane function UPF, wherein the second information comprises packet detection rule information and current delay information of the target packet; and
determining the first information according to the second information.

3. The method according to claim 1, wherein determining the first information in a case where the topological structure of the user plane function UPF changes due to the movement of the user equipment comprises:
receiving second information reported by an intermediate user plane function I-UPF in a case where a new I-UPF is inserted due to the movement of the user equipment, wherein the second information comprises packet detection rule information and current delay information of the target packet; and
determining the first information according to the second information.

4. The method according to claim 1, wherein determining the first information in a case where the topological structure of the user plane function UPF changes due to the movement of the user equipment comprises:
receiving second information reported by a transformed intermediate user plane function I-UPF in a case where an I-UPF is transformed due to the movement of the user equipment, wherein the second information comprises packet detection rule PDR information and current delay information of the target packet; and
determining the first information according to the second information.

5. The method according to any one of claims 2 to 4, wherein the second information is reported by the UPF through a packet forwarding control protocol PFCP session report request on an N4 interface.

6. The method according to any one of claims 2 to 4, wherein the second information comprises: a PDR ID and the current delay information of the target packet.

7. The method according to claim 1, wherein determining the first information in a case where the topological structure of the user plane function UPF changes due to the movement of the user equipment comprises:
determining the first information by the SMF in a case where the intermediate user interface function I-UPF is removed due to the movement of the user equipment.

8. The method according to any one of claims 1 to 4 and 7, wherein reporting the first information to the policy control function PCF comprises:
reporting the first information to the PCF through a session management policy update request on an N7 interface.

9. The method according to claim 8, wherein the first information comprises: a current policy and charging control rule ID and the current delay information of the target packet.

10. The method according to any one of claims 1 to 4, 7, and 9, wherein the current delay information comprises a delay of the target packet on the UPF.

11. The method according to any one of claims 1 to 4, 7, and 9, wherein receiving the new forwarding policy returned by the PCF comprises:
receiving the new forwarding policy returned by the PCF through a session management policy update response.

12. A method for controlling a packet forwarding policy under a TSN, applied to a policy control function PCF, comprising:
receiving first information reported by a session management function SMF, wherein the first information comprises a current forwarding policy and current delay information of a target packet, and the target packet is a packet sent to or from user equipment;
obtaining a new forwarding policy by adjusting the current forwarding policy according to the first information; and
feeding the new forwarding policy back to the SMF, so that the SMF issues the new forwarding policy to a target device, wherein the target device comprises an access and mobility management function AMF, a radio access network RAN, and the user equipment.

13. The method according to claim 12, wherein receiving the first information reported by the session management function SMF comprises:
receiving the first information reported by the SMF through a session management policy update request on an N7 interface.

14. The method according to claim 12, wherein obtaining the new forwarding policy by adjusting the current forwarding policy according to the first information comprises:
determining, according to the first information, whether a current delay of the target packet meets a TSN requirement; and
obtaining the new forwarding policy by adjusting the current forwarding policy in a case where the current delay of the target packet does not meet the TSN requirement.

15. The method according to claim 14, wherein obtaining the new forwarding policy by adjusting the current forwarding policy comprises:
increasing, in a case where the current delay of the target packet is greater than the TSN requirement, a precedence of a policy control rule in the current forwarding policy, and/or decreasing a packet delay budget in the current forwarding policy under a quality of service requirement; and
decreasing, in a case where the current delay of the target packet is less than the TSN requirement, the precedence of the policy control rule in the current forwarding policy, and/or increasing the packet delay budget in the current forwarding policy under the quality of service requirement.

16. The method according to claim 12, wherein feeding the new forwarding policy back to the SMF comprises:
feeding the new forwarding policy back to the SMF through a session management policy update response.

17. A method for controlling a packet forwarding policy under a TSN, applied to a user plane function UPF, comprising:
reporting second information to a session management function SMF in a case where a topological structure of the UPF changes;
wherein the second information comprises packet detection rule information and current delay information of a target packet from or sent to user equipment, the second information is used by the SMF to determine first information, the first information comprises a current forwarding policy and the current delay information of the target packet, and the first information is used by a policy control function PCF to adjust the current forwarding policy.

18. The method according to claim 17, wherein the UPF is one of the following:
a UPF accessed by the user equipment;
a new intermediate user plane function I-UPF inserted due to a movement of the user equipment; or
a transformed intermediate user plane function I-UPF due to a movement of the user equipment.

19. The method according to claim 17, wherein reporting the second information to the session management function SMF comprises:
reporting the second information to the SMF through a packet forwarding control protocol PFCP session report request on an N4 interface.

20. The method according to any one of claims 17 to 19, wherein the second information comprises: a PDR ID and the current delay information of the target packet.

21. An electronic device, comprising:
a processor; and
a memory, configured to store processor-executable instructions;
wherein the processor is configured to execute the instructions, so as to implement the method according to any one of claims 1 to 20.

22. A computer-readable storage medium, wherein instructions in the storage medium, when executed by a processor of an electronic device, enable the electronic device to perform the method according to any one of claims 1 to 20.
